# EUROPÄISCHE PATENTANMELDUNG

(11) **EP 1 352 816 A2**
(43) Veröffentlichungstag der Anmeldung: **15.10.2003**
(21) Anmeldenummer: 03004054.7
(22) Anmeldetag: 25.02.2003
(51) Int. Cl.: B62D 65/00

(54) **Bearbeitungsstation**

(30) Priorität: 10.04.2002 AT 5502002
(71) Anmelder: TMS Produktionssysteme GmbH, 4031 Linz (AT)
(72) Erfinder: Mühldorfer, Kurt, 4522 Sierning (AT); Lepschy, Erich, 4115 Kleinzell 98 (AT)
(74) Vertreter: VA TECH Patente GmbH & Co

(57) **Zusammenfassung**

Bearbeitungsstationen (1) sollen in der Regel einen niedrigen Platzbedarf und niedrige Taktzeiten aufweisen. Zum Einlegen von Bauteilen in die dafür vorgesehenen Spannrahmen (2) der Bearbeitungsstation (1) werden zur Verbesserung der Bestückbarkeit die Spannrahmen (2) oftmals in eine Bestückungsposition bewegt, um das Einlegen, insbesondere großer Bauteile, zu erleichtern. Dabei muss der Bewegungsbereich der Spannrahmen (2) selbstverständlich freigehalten werden, weshalb notwendige Bearbeitungseinheiten weiter entfernt von der Bearbeitungsstation angeordnet sein müssen, oder aus dem Bewegungsbereich verschoben werden müssen, was beides hinsichtlich dem Platzbedarf und der Taktzeit, aber auch den Kosten einer solchen Bearbeitungsstation, sehr nachteilig ist. Die vorliegende Erfindung verbessert diese Situation nachträglich, indem der Spannrahmen in seiner Bestückungsposition zumindest abschnittsweise in Richtung zur Mitte der Bearbeitungsstation hin versetzt angeordnet ist und die Bearbeitungseinheit dadurch in einem verringerten Abstand zur Mitte der Bearbeitungsstation (1) anordenbar ist, wodurch der Bewegungsbereich der Spannrahmen wesentlich kleiner wird.

## Beschreibung

Die vorliegende Erfindung betrifft eine Bearbeitungsstation, insbesondere eine Karosserieschweißstation, zum Bearbeiten von Bauteilen, vorzugsweise Fahrzeugkarosserien, mit zumindest einem an zumindest einer Seite der Bearbeitungsstation angeordneten, von einer Bearbeitungsposition in eine Bestückungsposition bewegbaren Spannrahmen und mit zumindest einer im Bereich der Bearbeitungsstation ortsfest angeordneten Bearbeitungseinheit, insbesondere ein Bearbeitungsroboter, sowie eine Fertigungsstraße bestehend aus einer Anzahl aufeinanderfolgender Bearbeitungsstationen.

Zur Verbesserung der Bestückbarkeit von Spannrahmen mit Bauteilen in einer Bearbeitungsstation ist es bekannt, die Spannrahmen um einen bestimmten Winkel zu verdrehen, wobei die Zugänglichkeit in der Regel umso besser wird, je größer der Verdrehwinkel wird und bei ungefähr 90° die beste Zugänglichkeit angenommen werden kann. Dadurch können die Bauteil, insbesondere große Bauteile wie Karosserieseitenteile, etc., einfacher in die Spannrahmen eingelegt werden. Das Problem dabei ist, dass der Verdrehbereich frei von Hindernissen aller Art gehalten werden muss, also insbesondere auch von Bearbeitungsrobotern. Das bedeutet wiederum, dass Roboter eine größere Reichweite aufweisen müssen, um in der Bearbeitungsstation agieren zu können, was zu geringeren möglichen Traglasten führt, oder größere Roboter erforderlich macht, wobei beides als erheblicher Nachteil anzusehen ist. Eine andere Möglichkeit wäre, die Roboter vor dem Verdrehen aus dem Verdrehbereich herauszufahren, wie z.B. aus der DE 198 03 093 A1 bekannt, was wiederum die Taktzeit der Bearbeitungsstation vergrößert und-zu einer geringeren Produktivität führt und den Platzbedarf der Bearbeitungsstation erheblich vergrößert.
Zwei grundsätzliche Anforderungen an Bearbeitungsstationen dieser Art, nämlich geringer Platzbedarf und geringe Taktzeit, stehen sich somit widersprüchlich gegenüber.

Die gegenständliche Erfindung hat sich daher die Aufgabe gestellt, eine Bearbeitungsstation und ein Verfahren zum Betreiben einer solchen Bearbeitungsstation anzugeben, die einerseits die Bestückung der Spannrahmen mit Bauteilen erleichtert und andererseits einen möglichst geringen Platzbedarf aufweist und sehr kurze Taktzeiten ermöglicht.

Diese Aufgabe wird durch die Bearbeitungsstation dadurch gelöst, dass der Spannrahmen in seiner Bestückungsposition zumindest abschnittsweise in Richtung zur Mitte der Bearbeitungsstation hin versetzt angeordnet ist und die Bearbeitungseinheit dadurch in einem verringerten Abstand zur Mitte der Bearbeitungsstation anordenbar ist. Für das Verfahren ergibt sich die erfindungsgemäße Lösung daraus, dass der Spannrahmen von einer Bearbeitungsposition um eine einen beliebigen Abstand in Richtung der Mitte der Bearbeitungsstation hin versetze Drehachse in Richtung von der Mitte der Bearbeitungsstation weg um einen beliebigen Winkel, vorzugsweise im Wesentlichen 90°, in eine Bestückungsposition verdreht wird, der Spannrahmen in der Bestückungsposition mit einem Bauteil, insbesondere ein Karosserieteil, bestückt wird und der Spannrahmen zur Bearbeitung der Bauteile in der Bearbeitungsstation in die Bearbeitungsposition zurück gedreht wird.
Durch die versetzte Lage können nun Bearbeitungsroboter mit kleinerer Reichweite verwendet werden, weshalb kleinere, herkömmliche Roboter ohne Verlängerungen der Reichweite verwendet werden können. Diese Bearbeitungsroboter müssen beim Bewegen von einer Bearbeitungsposition in eine Bestückungsposition auch nicht mehr aus dem Bewegungsbereich der Spannrahmen gefahren werden. Als direkte Folge daraus kann einerseits der benötigte Platzbedarf einer solchen Bearbeitungsstation wesentlich verkleinert werden und die Taktzeit einer solchen Bearbeitungsstation wesentlich verkürzt werden, ohne die Zugänglichkeit der Spannrahmen, zum Bestücken mit Bauteilen, einzuschränken. Außerdem wird eine solche Bearbeitungsstation, im Vergleich zu bisher bekannten Bearbeitungsstation, auch erheblich günstiger, was aus den oben genannten Vorteilen direkt einsichtig ist.

Eine Anordnung in der der Spannrahmen durch eine rotatorische und/oder translatorische Bewegung aus seiner im Wesentlichen vertikalen oder gegenüber dieser geneigten Bearbeitungsposition in eine im Wesentlichen horizontale oder gegenüber dieser geneigten Bestückungsposition bewegbar ist, hat sich in der Praxis als äußerst vorteilhaft erwiesen. Ebenfalls sehr vorteilhaft ist es dabei, wenn der Spannrahmen in seiner Bestückungsposition um einen vorbestimmten Abstand, vorzugsweise 5% bis 50% seiner Höhe, in Richtung zur Mitte der Bearbeitungsstation versetzt angeordnet ist.

Die versetzte Lage des Spannrahmens in seiner Bestückungsposition wird sehr einfach erreicht, wenn die in der Bearbeitungsposition des Spannrahmens obere Seite des Spannrahmens gegenüber einer gedachten Einhüllenden, die durch eine Verdrehung des Spannrahmens um eine im unteren Bereich des Spannrahmens befindliche Drehachse entsteht, in Richtung zur Mitte der Bearbeitungsstation hin versetzt ist.

Wenn eine Drehachse des Spannrahmens gegenüber dem Spannrahmen um einen vorbestimmten Abstand in Richtung der Mitte der Bearbeitungsstation hin versetzt angeordnet ist, dann folgt aus der speziellen Anordnung der Drehachse des Spannrahmens und aus der Kinematik, dass der Spannrahmen beim Verdrehen seitlich weniger über die Bearbeitungsstation hinausragt, wodurch notwendige Bearbeitungsroboter näher an der Bearbeitungsstation positioniert werden können, ohne sich im direkten Verdrehbereich der Spannrahmen zu befinden mit allen sich daraus ergebenden oben beschriebenen Vorteilen. Weiters wird die Zugänglichkeit noch verbessert, da die Spannebene des Spannrahmens, wiederum aus der Kinematik heraus, in der verdrehten Lage tiefer zu liegen kommt, wie bei bekannten Bearbeitungsstationen, was die Bestückung der Spannrahmen mit Bauteilen erleichtert.
In der Praxis hat es sich dabei als besonders günstig erwiesen, wenn die Drehachse um 50 bis 1000mm, vorzugsweise 200 bis 600mm, versetzt angeordnet ist.

Eine konstruktiv sehr vorteilhafte und einfache Lösung ergibt sich durch einen L-förmigen Spannrahmen, wobei der Drehpunkt am Ende eines Schenkels angeordnet ist und der Schenkel mit dem Drehpunkt 50 bis 1000mm, vorzugsweise 200 bis 600mm, lang ist.

Wenn in der Bearbeitungsstation ein geeigneter Antrieb vorgesehen ist, mittels dem der Spannrahmen durch eine rotatorische Bewegung, vorzugsweise eine Verdrehung um etwa 90°, von einer, vorzugsweise im Wesentlichen vertikalen, Bearbeitungsposition in die Bestückungsposition, bewegbar ist, kann das Verdrehen des Spannrahmens sehr einfach und vor allem selbsttätig durchgeführt werden.
Die rotatorische Bewegung kann außerdem durch den Antrieb in vorteilhafter Weise bei Bedarf mit einer translatorischen Bewegung überlagert werden.

In sehr vorteilhafter Weise wird eine Bestückungseinrichtung vorgesehen, mit der der Spannrahmen in einer beliebig verdrehten und/oder verschobenen Position, vorzugsweise eine im Wesentlichen horizontale Position, mit zumindest einem Bauteil, vorzugsweise ein Karosserieteil, bestückbar ist, was noch dadurch verbessert werden kann, indem die Bestückung mittels eines Roboters durchgeführt wird.
Eine zusätzliche erhebliche Verkürzung der Taktzeit kann erreicht werden, wenn die Bestückung während der Schwenkbewegung durchführbar ist, wobei grundsätzlich beide Schwenkbewegungen, von der Bearbeitungsstation hin bzw. weg, genutzt werden können. Alternativ dazu kann die Bestückung auch manuell durch eine Arbeitskraft durchgeführt werden.

Ganz besonders vorteilhaft wird der Spannrahmen nach der Bestückung durch einen geeigneten Antrieb durch eine rotatorische und/oder translatorische Bewegung, vorzugsweise ein Verdrehung um etwa 90°, von einer Bestückungsposition zurück in die Bearbeitungsposition bewegt, womit die bestückten Bauteile zur Bearbeitung sehr einfach in die Bearbeitungsstation gebracht werden können.

Es ist weiters ganz besonders vorteilhaft, wenn der Bauteil in der Bearbeitungsposition in der Bearbeitungsstation, vorzugsweise durch den Bearbeitungsroboter, bearbeitbar ist. Dadurch kann die Taktzeit weiter verkürzt werden, da der Bauteil direkt bearbeitet werden kann und damit die Notwendigkeit entfällt, den Bauteil nach dem Verdrehen des Spannrahmens entgültig zu positionieren, wodurch die Bearbeitungsstation auch weiter vereinfacht werden kann.

Durch das Vorsehen einer geeigneten Umrüsteinheit, vorzugsweise ein Roboter, mittels der der Spannrahmen oder einzelne Segmente des Spannrahmens zum Umrüsten auf einen anderen Fahrzeugtyp austauschbar sind, kann die Flexibilität der Bearbeitungsstation wesentlich vergrößert werden, da zu einem Typenwechsel lediglich die Spannrahmen oder noch besser lediglich Teile der Spannrahmen auszutauschen sind. Aufwendige Änderungen an der Bearbeitungsstation selbst bei einem Typenwechsel fallen somit weg.

Als ganz besonders vorteilhaft stellt sich eine Bearbeitungsstation heraus, bei der die Bestückung mit Bauteilen, die Bearbeitung der Bauteile und das Umrüsten bei einem Fahrzeugtypwechsel, bzw. eine beliebige Kombination dieser Arbeitsvorgänge, mit der gleichen Handhabungseinheit, vorzugsweise ein Roboter, durchführbar ist, wobei gegebenenfalls das Roboterwerkzeug auszutauschen ist. Dies führt zu einer weiteren Vereinfachung und Vergünstigung der Bearbeitungsstation.

Wenn die vorhandenen Spannrahmen gleichzeitig, vorzugsweise synchron, bewegt werden kann die Zeit zum Bewegen der Spannrahmen, z.B. von der Bestückungs- zur Bearbeitungsstation bzw. umgekehrt, minimiert werden, was für die Taktzeit von Vorteil ist. Außerdem können die Bauteile dann gleichzeitig in der Bearbeitungsstation gespannt werden, werden also gleichmäßig belastet.

Die erfindungsgemäße Bearbeitungsstation lässt sich sehr vorteilhaft in einer Fertigungsstraße für Fahrzeugkarosserien mit einer Anzahl hintereinander durchlaufender Bearbeitungsstationen zum Bearbeiten der Fahrzeugkarosserien einsetzen. Eine solche Fertigungsstraße kann, verglichen zu herkömmlichen Fertigungsstraße, mit einem kleineren Platzbedarf realisiert werden, weist aufgrund der größeren möglichen Taktzeiten eine höhere Produktivität auf und ist zudem auch noch billiger umzusetzen.

Die vorliegende Erfindung wird anhand des nicht einschränkenden Ausführungsbeispiels gemäß den Figuren 1 bis 4 beschrieben. Dabei zeigt
Fig. 1 eine perspektivische Ansicht der erfindungsgemäßen Bearbeitungsstation in einer Bearbeitungsposition,
Fig. 2 eine perspektivische Ansicht der erfindungsgemäßen Bearbeitungsstation während des Verschwenkens in einer Zwischenposition,
Fig. 3 eine perspektivische Ansicht der erfindungsgemäßen Bearbeitungsstation in einer Bestückungsposition und
Fig. 4 eine perspektivische Ansicht einer erfindungsgemäßen Bearbeitungsstation.

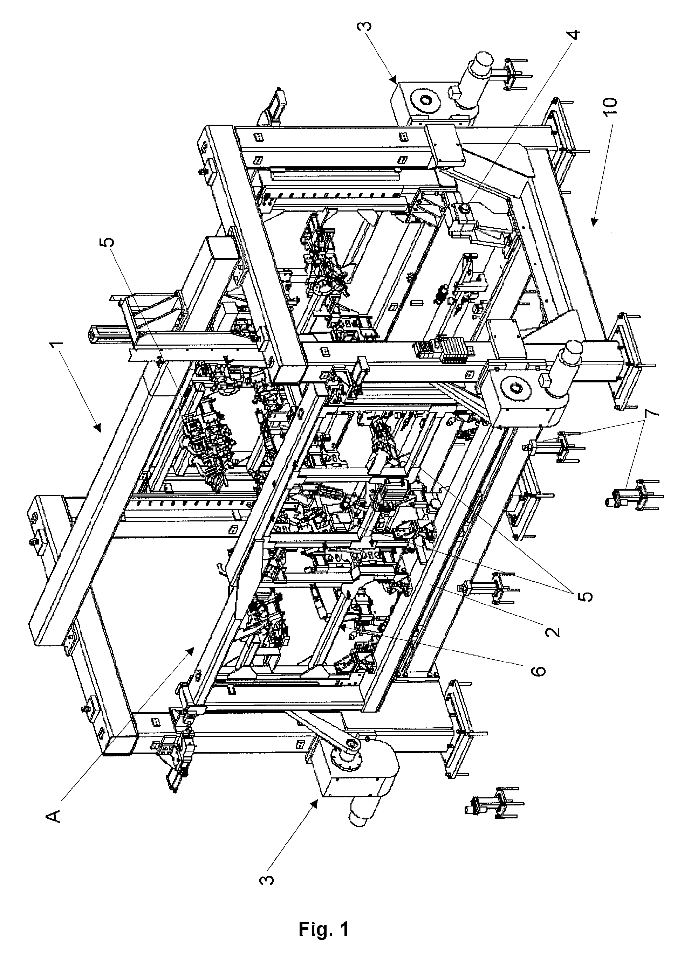

Die Fig. 1 bis 3 werden in Folge gemeinsam beschrieben. In der Fig. 1 ist eine Bearbeitungsstation 1 dargestellt, die in Fertigungsrichtung an beiden Seiten je einen L-förmigen Spannrahmen 2 aufweist. Die Bearbeitungsstation 1 kann einzeln angeordnet sein, kann aber auch in eine Fertigungsstraße 10 mit einer Anzahl von hintereinander durchlaufender Bearbeitungsstationen 1 integriert sein.
Die L-förmigen Spannrahmen 2 sind drehbar gelagert, wobei der Drehpunkt 4 der Spannrahmen 2 am Ende der kurzen Schenkeln der L-förmigen Spannrahmen 2 angeordnet sind. Daraus ergibt sich eine im wesentlichen horizontale Drehachse, die etwa parallel zur Fertigungsrichtung verläuft und die bezüglich der Spannrahmen 2 zur Mitte der Bearbeitungsstation 1 hin versetzt ist. Der Drehpunkt 4 ist also gegenüber dem Schnittpunkt des langen und des kurzen Schenkels des L-förmigen Spannrahmen 2 versetzt.
Die Spannrahmen 2 können durch einen geeigneten Antrieb 3 verdreht werden. In diesem Ausführungsbeispiel ist der Antrieb 3 als Kurbeltrieb ausgeführt, wobei ein Ende der Kurbel 8 in einer Führung 9 am Spannrahmen 2 geführt ist. Es wäre natürlich auch denkbar, den Antrieb 3 direkt an der Drehachse der Spannrahmen 2 anzuordnen oder in geeigneter Weise anders auszuführen, ohne den eigentlichen Erfindungsgedanken zu verlassen. Ebenso wäre es natürlich auch denkbar, diese Rotationsbewegung mit einer Translationsbewegung zu überlagern, um eine bestimmte Endlage zu erreichen.
Die Spannrahmen 2 sind mit einzelnen Spannelementen 5 oder aus mehreren Spannelementen 5 bestehenden Spannsegmenten 6 bestückt, die in der Lage sind, Bauteile, wie etwa Karosserieteile, zu halten und gegebenenfalls miteinander zu verspannen.
Die Spannrahmen 2 befinden sich in der Fig. 1 in einer im Wesentlichen vertikalen Bearbeitungsposition A, d.h. dass von den Spannrahmen 2 gehaltene Bauteile, die in Fig. 1 zwecks der Übersichtlichkeit nicht dargestellt sind, in eine geeignete Position gebracht wurden, um in der Bearbeitungsstation 1 bearbeitet zu werden. Die Bearbeitung erfolgt beispielsweise mit in Fig. 1 nicht dargestellten Schweißrobotern, die im Bereich der Bearbeitungsstation 1 angeordnet werden und die durch die Spannrahmen 2 zusammengehaltene Rohkarosse auf Geometrie Punktschweißen oder eventuell auch Ausschweißen.

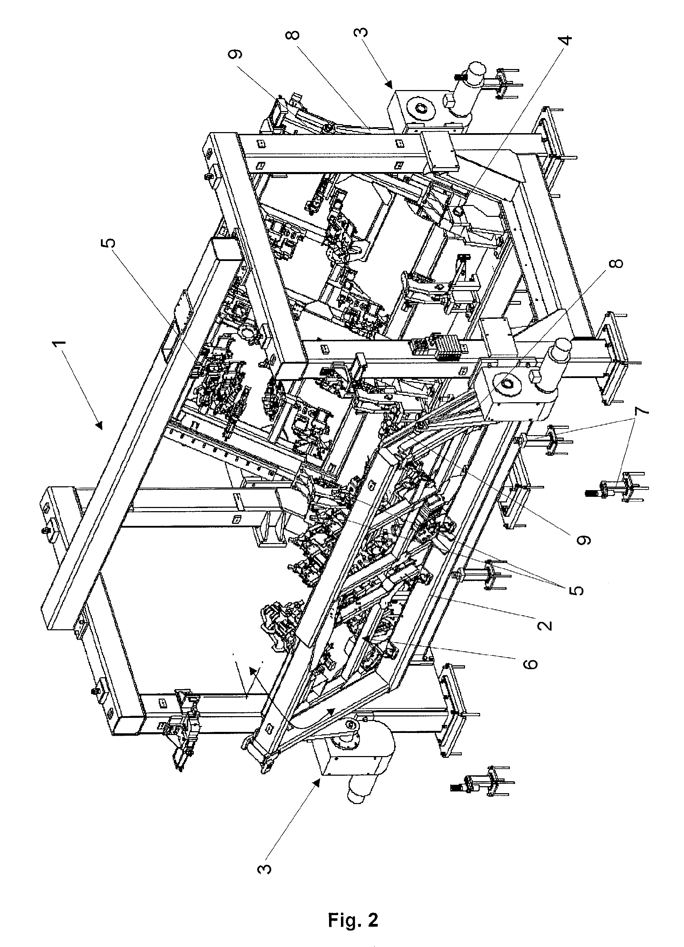

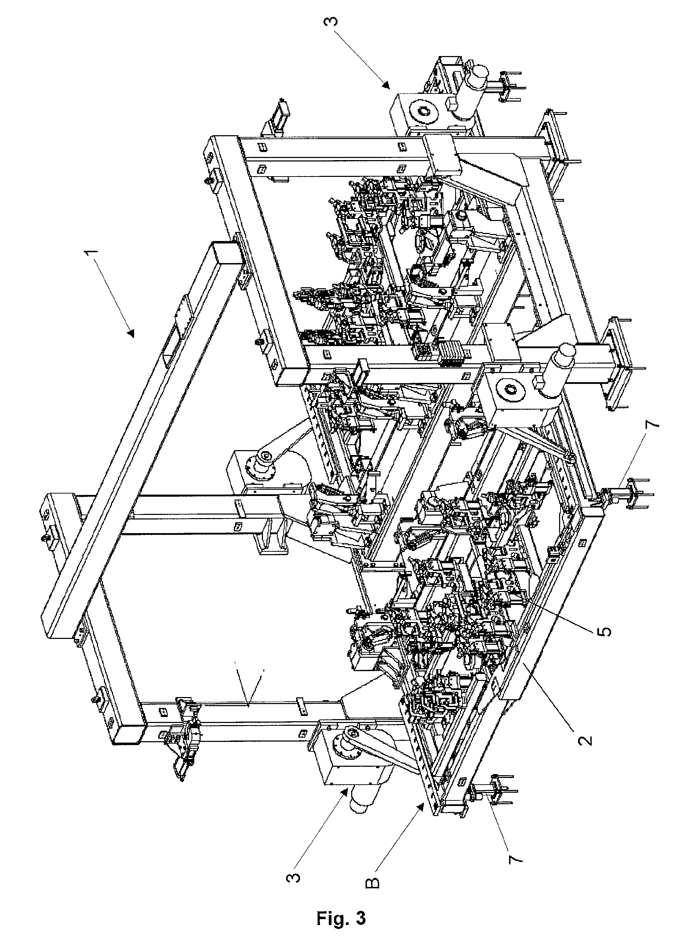

Die Fig. 2 zeigt dieselbe Bearbeitungsstation 1 während des Verschwenkens von der Bearbeitungsposition A in eine im Wesentlichen horizontale Bestückungsposition B, wie in Fig. 3 dargestellt. Dazu wird der Antrieb 3 verdreht, wodurch die Kurbeln 8 in den zugeordneten Führungen 9 geführt werden und so die notwendige rotatorische Bewegung erzielt wird.

Die Fig. 3 zeigt nun die erfindungsgemäße Bearbeitungsstation 1 in der Endlage, in der sogenannten Bestückungsposition B. In dieser wurden die Spannrahmen 2 durch den Antrieb 3 in eine im Wesentlichen horizontale Position verdreht. Zwecks der Positionsgenauigkeit werden die Spannrahmen 2 gegen Anschläge 7 verdreht. In dieser Bestückungsposition B sind die Spannrahmen 2 sehr gut zugänglich und können durch geeignete nicht dargestellte Bestückungseinrichtungen, wie im Bereich der Bearbeitungsstation 1 angeordnete Bestückungsroboter, mit Bauteilen, wie Karosserieteilen, einfach bestückt werden. Die Bauteile können dabei mit beliebigen hinlänglich bekannten Methoden zugeführt werden. Natürlich kann die Bestückung auch manuell durch Arbeitskräfte erfolgen, wobei gegebenenfalls geeignete Hilfsvorrichtungen zur Verfügung gestellt werden können.
Bei der Bestückung werden die Bauteile positionsgerecht in die Spannrahmen 2 gelegt und von den zugeordneten Spannelementen 5 gehalten.
Es ist natürlich genauso denkbar, dass die Spannrahmen 2 nicht um 90°, sondern um einen kleineren Winkel verdreht werden und in schräger Position bestückt werden, oder dass die Spannrahmen 2 während der Bewegung bestückt werden.
Durch die weiter mittig liegenden Drehachsen der Spannrahmen 2 ragen die Spannrahmen 2 in ihrer Bestückungsposition B nicht mit der gesamten Länge der langen Schenkel der L-förmigen Spannrahmen 2 über die Bearbeitungsstation 1 hinaus, sondern nur um die um die Länge der kurzen Schenkel der L-förmigen Spannrahmen 2 reduzierte Länge der langen Schenkel der L-förmigen Spannrahmen 2. Dadurch können die Bearbeitungs- und/oder Bestückungsroboter näher an der Bearbeitungsstation 1 angeordnet werden.
Durch die L-förmigen Spannrahmen 2 kommt die Spannebene in der Bestückungsposition B auch tiefer zu liegen, wodurch die Spannrahmen 2 für die Bestückungsroboter noch besser zugänglich werden.

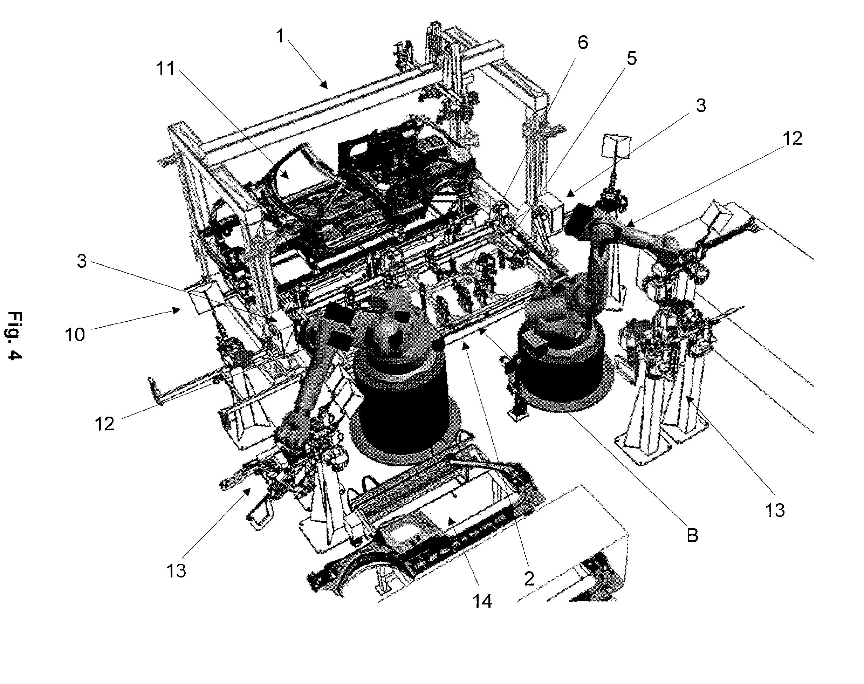

Ein Teil einer beispielhaften Anordnung einer Bearbeitungsstation 1 einer Fertigungsstraße 10 ist in Fig. 4 dargestellt. In der Bearbeitungsstation 1 befindet sich hier eine Rohkarosse 11, die durch geeignete Fördermittel, wie, eine Hängebahn oder durch Skids, in die Bearbeitungsstation 1 befördert wurde. Der Spannrahmen 2 befindet sich hier noch in der Bestückungsposition B. Im Bereich der Bearbeitungsstation 1 sind weiters zwei Bearbeitungsroboter 12 angeordnet. Diese können nun in ausreichender Nähe zur Bearbeitungsstation 1 angeordnet werden, da der Spannrahmen 2 erfindungsgemäß in vollkommen ausgeklappter Lage nicht mit seiner gesamten Höhe über die Bearbeitungsstation 1 hinausragt. Jeder der Bearbeitungsroboter 12 trägt ein für den aktuellen Arbeitsschritt erforderliches Werkzeug, das aus einem in der Nähe zum Bearbeitungsroboter 12 angeordneten Werkzeugmagazin 13 entnommen werden kann. Z.B. kommen dazu Greifwerkzeuge oder Schweißzangen, etc. in Frage. Weiters hat der Bearbeitungsroboter 12 auch Zugriff auf ein Bauteilmagazin 14 aus dem der Bearbeitungsroboter 12 mit einem Greifwerkzeug einen Bauteil 12, z.B. einen Karosserieseitenteil, entnimmt und in den Spannrahmen 2 in der Bestückungsposition B einlegt. Die Spannelemente 5 des Spannrahmens 2 halten daraufhin den Bauteil selbsttätig in der richtigen Lage. Der Bearbeitungsroboter 12 kann nun sein Werkzeug wechseln, beispielsweise von einem Greifwerkzeug auf ein Schweißwerkzeug, und kann die Bearbeitung an der Rohkarosse beginnen.

Es ist selbstverständlich, dass die in Fig. 4 beschriebene Ausgestaltung einer Bearbeitungsstation 1 nur beispielhaft ist und das beliebige andere Anordnung ebenfalls denkbar sind. Gleichfalls ist es denkbar mehr als einen Bauteil in den Spannrahmen 2 zu spannen und gleichzeitig in der Bearbeitungsstation 1 zu bearbeiten.

Ein Bearbeitungszyklus in einer solchen Bearbeitungsstation 1 könnten dann beispielsweise so ablaufen, dass eine Rohkarosse 11 auf einem geeigneten Fördermittel, wie eine Hängebahn oder ein selbstfahrendes Transportfahrzeug, etc., in die Bearbeitungsstation 1 gebracht wird. Während dieses Vorganges werden die Spannrahmen 2 von der Bearbeitungsposition A in die Bestückungsposition B bewegt und, wie oben beschrieben, mit Bauteilen bestückt. Nach der Bestückung werden die Spannrahmen 2 wieder in die Bearbeitungsposition A bewegt, in der die Spannelemente 5 die Bauteile mit der mittlerweile in der Bearbeitungsstation 1 befindlichen Rohkarosse verspannen. Im Anschluss daran werden die Bauteile mit der Rohkarosse durch Bearbeitungsroboter 12 verschweißt, die Spannelemente 5 gelöst und die um die Bauteile erweiterte Rohkarosse wird aus der Bearbeitungsstation 1 gefahren.
Die Bewegung der Spannrahmen 2 kann natürlich auch gleichzeitig und synchron erfolgen. Eine solche Synchronisation der Bewegung kann beispielsweise in hinlänglich bekannter Weise mittels Inkrementalgeber und die momentane Leistungsaufnahme der Motoren erreicht werden.

In einer Fertigungsstraße können mehrere solcher Bearbeitungsstationen 1 hintereinander angeordnet sein und auf diese Art und Weise eine ganze Karosserie aufgebaut werden.
Der oben angeführte Ablauf kann natürlich auch beliebig anders gestaltet werden, wobei in den meisten Fällen eine Reduzierung der Taktzeit das Ziel ist.

Bei einem Wechsel des zu bearbeitenden Karosserietyps muss nicht der gesamte Spannrahmen 2 ausgetauscht werden, wobei natürlich auch das möglich wäre, sondern es reicht, wenn einzelne Spannsegmente 6 oder Spannelemente 5 ausgetauscht werden. Der Austausch kann wiederum durch geeignete Umrüsteinheiten, wie Bearbeitungsroboter 12, erfolgen. Dazu könnten z.B. in der Nähe der Bearbeitungsstationen 1 in hinlänglich bekannter Weise Spannsegment-, Spannelement- oder Spannrahmenmagazine angeordnet sein, aus denen die Umrüsteinheiten die notwendigen Komponenten entnehmen. Der Wechsel kann dabei in einer beliebigen geeigneten Position des Spannrahmens 2, z.B. der Bestückungsposition B, erfolgen.

Weiters ist es auch denkbar, dass die Bestückung, die Bearbeitung der Bauteile und das Umrüsten bei einem Fahrzeugtypwechsel mit dem gleichen Bearbeitungsroboter 12 durchführbar ist, wobei wie oben beschrieben gegebenenfalls lediglich das Roboterwerkzeug auszutauschen ist.

## Patentansprüche

1. Bearbeitungsstation, insbesondere eine Karosserieschweißstation, zum Bearbeiten von Bauteilen, vorzugsweise Fahrzeugkarosserien, mit zumindest einem an zumindest einer Seite der Bearbeitungsstation angeordneten, von einer Bearbeitungsposition in eine Bestückungsposition bewegbaren Spannrahmen und mit zumindest einer im Bereich der Bearbeitungsstation ortsfest angeordneten Bearbeitungseinheit, insbesondere ein Bearbeitungsroboter, **dadurch gekennzeichnet, dass** der Spannrahmen in seiner Bestückungsposition zumindest abschnittsweise in Richtung zur Mitte der Bearbeitungsstation hin versetzt angeordnet ist, und dass die Bearbeitungseinheit dadurch in einem verringerten Abstand zur Mitte der Bearbeitungsstation anordenbar ist.

2. Bearbeitungsstation nach Anspruch 1, **dadurch gekennzeichnet, dass** der Spannrahmen aus seiner im Wesentlichen vertikalen oder gegenüber dieser geneigten Bearbeitungsposition in eine im Wesentlichen horizontale oder gegenüber dieser geneigten Bestückungsposition bewegbar ist, wobei der Spannrahmen rotatorisch und/oder translatorisch bewegbar ist.

3. Bearbeitungsstation nach Anspruch 1 oder 2, **dadurch gekennzeichnet, dass** der Spannrahmen in seiner Bestückungsposition um einen vorbestimmten Abstand, vorzugsweise 5% bis 50% seiner Höhe, in Richtung zur Mitte der Bearbeitungsstation versetzt angeordnet ist.

4. Bearbeitungsstation nach einem der Ansprüche 1 bis 3, **dadurch gekennzeichnet, dass** die in der Bearbeitungsposition des Spannrahmens obere Seite des Spannrahmens in eine Bestückungsposition bewegbar ist, in der diese obere Seite des Spannrahmens gegenüber einer gedachten Einhüllenden, die durch eine Verdrehung des Spannrahmens um eine im unteren Bereich des Spannrahmens befindliche Drehachse entsteht, in Richtung zur Mitte der Bearbeitungsstation hin versetzt ist.

5. Bearbeitungsstation nach einem der Ansprüche 1 bis 4, **dadurch gekennzeichnet, dass** eine Drehachse des Spannrahmens gegenüber dem Spannrahmen um einen vorbestimmten Abstand in Richtung der Mitte der Bearbeitungsstation hin versetzt angeordnet ist.

6. Bearbeitungsstation nach Anspruch 5, **dadurch gekennzeichnet, dass** die Drehachse um 50 bis 1000mm, vorzugsweise 200 bis 600mm, versetzt angeordnet ist.

7. Bearbeitungsstation nach Anspruch 5 oder 6, **dadurch gekennzeichnet, dass** der Spannrahmen durch einen Schenkel L-förmig erweitert ausgeführt ist und die Drehachse am der Bearbeitungsstation zugewandten Ende dieses Schenkels angeordnet ist.

8. Bearbeitungsstation nach Anspruch 7, **dadurch gekennzeichnet, dass** der Schenkel 50 bis 1000mm, vorzugsweise 200 bis 600mm, lang ist.

9. Bearbeitungsstation nach einem der Ansprüche 1 bis 8, **dadurch gekennzeichnet, dass** ein Antrieb vorgesehen ist, mittels dem der Spannrahmen durch eine rotatorische Bewegung, vorzugsweise eine Verdrehung um etwa 90°, von einer, vorzugsweise im Wesentlichen vertikalen, Bearbeitungsposition in die Bestückungsposition, bewegbar ist.

10. Bearbeitungsstation nach Anspruch 9, **dadurch gekennzeichnet, dass** der rotatorischen Bewegung des Spannrahmens mittels des Antriebs eine translatorische Bewegung überlagerbar ist.

11. Bearbeitungsstation nach einem der Ansprüche 1 bis 10, **dadurch gekennzeichnet, dass** eine Bestückungseinrichtung vorgesehen ist, mit der der Spannrahmen in einer beliebig verdrehten und/oder verschobenen Bestückungsposition, vorzugsweise eine im Wesentlichen horizontale Position, mit zumindest einem Bauteil, vorzugsweise ein Karosserieteil, bestückbar ist.

12. Bearbeitungsstation nach Anspruch 11, **dadurch gekennzeichnet, dass** die Bestückung mittels eines Roboters durchführbar ist.

13. Bearbeitungsstation nach Anspruch 11, **dadurch gekennzeichnet, dass** die Bestückung manuell durch eine Arbeitskraft durchführbar ist.

14. Bearbeitungsstation nach Anspruch 11, 12 oder 13, **dadurch gekennzeichnet, dass** die Bestückung des Spannrahmens mit dem Bauteil mittels der Bestückungseinrichtung während der rotatorischen und/oder translatorischen Bewegung des Spannrahmens durchführbar ist.

15. Bearbeitungsstation nach einem der Ansprüche 11 bis 14, **dadurch gekennzeichnet, dass** der Spannrahmen nach der Bestückung mittels der Bestückungseinrichtung durch einen Antrieb durch eine rotatorische und/oder translatorische Bewegung, vorzugsweise eine Verdrehung um etwa 90°, von der Bestückungsposition zurück in die Bearbeitungsposition bewegbar ist.

16. Bearbeitungsstation nach einem der Ansprüche 1 bis 15, **dadurch gekennzeichnet, dass** mit der Bearbeitungseinheit der Bauteil in der Bearbeitungsstation in der Bearbeitungsposition bearbeitbar ist.

17. Bearbeitungsstation nach einem der Ansprüche 1 bis 16, **dadurch gekennzeichnet, dass** eine Umrüsteinheit, vorzugsweise ein Roboter, vorgesehen ist, mittels der der Spannrahmen oder einzelne Segmente des Spannrahmens zum Umrüsten auf einen anderen Fahrzeugtyp austauschbar sind.

18. Bearbeitungsstation nach einem der Ansprüche 11 bis 17, **dadurch gekennzeichnet, dass** die Bestückung mit Bauteilen, die Bearbeitung der Bauteile und/oder das Umrüsten bei einem Fahrzeugtypwechsel mit der gleichen Bearbeitungseinheit, vorzugsweise ein Bearbeitungsroboter, durchführbar ist, wobei gegebenenfalls das Roboterwerkzeug austauschbar ist.

19. Bearbeitungsstation nach einem der Ansprüche 1 bis 18, **dadurch gekennzeichnet, dass** in der Bearbeitungsstation mehrere Spannrahmen vorgesehen sind, die durch den Antrieb gleichzeitig, vorzugsweise synchron, verdreh- und/oder verschiebbar sind.

20. Fertigungsstraße zur Herstellung von Fahrzeugkarosserien mit einer Anzahl hintereinander durchlaufender Bearbeitungsstationen zum Bearbeiten der Fahrzeugkarosserien, wobei zumindest eine Bearbeitungsstation nach einem der Ansprüche 1 bis 18 ausgeführt ist.
